# EUROPEAN PATENT APPLICATION

(11) **EP 1 499 131 A1**
(43) Date of publication of application: **19.01.2005**
(21) Application number: 03015991.7
(22) Date of filing: 14.07.2003
(51) Int. Cl.: H04N 7/24, H04N 5/00

(54) **Method and apparatus for decoding a data stream in audio video streaming systems**

(71) Applicant: DEUTSCHE THOMSON-BRANDT GMBH, 78048 Villingen-Schwenningen (DE)
(72) Inventor: Schmidt, Jürgen, 31515 Wunstorf (DE)
(74) Representative: Rittner, Karsten, Dr.

(57) **Abstract**

A method for decoding a data stream containing audio/video substreams (14) and control substreams comprises buffering nodes (12) having the possibility to buffer multiple data packets in the same buffer. This may be achieved by having separate parameters for the allocated buffer size and any stored packet. Thus, not only multiple packets may be stored in the buffering node (12), but also such node may exist while its buffer is empty, so that the node may be reused later. This is particularly useful for buffering and selectively accessing multiple audio packets in MPEG-4 audio nodes or sound nodes.

## Description

This invention relates to a method and apparatus for decoding a data stream in a buffering node for multimedia streaming systems, like MPEG-4.

### Background

In the MPEG-4 standard ISO/IEC 14496, in particular in part 1 Systems, an audio/video (AV) scene can be composed from several audio, video and synthetic 2D/3D objects that can be coded with different MPEG-4 format coding types and can be transmitted as binary compressed data in a multiplexed bitstream comprising multiple substreams. A substream is also referred to as Elementary Stream (ES), and can be accessed through a descriptor. ES can contain AV data, or can be so-called Object Description (OD) streams, which contain configuration information necessary for decoding the AV substreams. The process of synthesizing a single scene from the component objects is called composition, and means mixing multiple individual AV objects, e.g. a presentation of a video with related audio and text, after reconstruction of packets and separate decoding of their respective ES. The composition of a scene is described in a dedicated ES called 'Scene Description Stream', which contains a scene description consisting of an encoded tree of nodes called Binary Information For Scenes (BIFS). 'Node' means a processing step or unit used in the MPEG-4 standard, e.g. an interface that buffers data or carries out time synchronization between a decoder and subsequent processing units. Nodes can have attributes, referred to as fields, and other information attached. A leaf node in the BIFS tree corresponds to elementary AV data by pointing to an OD within the OD stream, which in turn contains an ES descriptor pointing to AV data in an ES. Intermediate nodes, or scene description nodes, group this material to form AV objects, and perform e.g. grouping and transformation on such AV objects. In a receiver the configuration substreams are extracted and used to set up the required AV decoders. The AV substreams are decoded separately to objects, and the received composition instructions are used to prepare a single presentation from the decoded AV objects. This final presentation, or scene is then played back.

According to the MPEG-4 standard, audio content can only be stored in the 'audioBuffer' node or in the 'mediaBuffer' node. Both notes are able to store a single data block at a time. When storing another data block, the previously stored data block is overwritten.

The 'audioBuffer' node can only be loaded with data from the audio substream when the node is created, or when the 'length' field is changed. This means that the audio buffer can only be loaded with one continuous block of audio data. The allocated memory matches the specified amount of data. Further, it may happen that the timing of loading data samples is not exactly due to the timing model of the BIFS decoder.

For loading more than one audio sample, it is possible to build up an MPEG-4 scene using multiple 'audioBuffer' nodes. But it is difficult to handle the complexity of the scene, and to synchronize the data stored in the different 'audioBuffer' nodes. Additionally, for each information a new stream has to be opened.

### Summary of the Invention

The problem to be solved by the invention is to improve storage and retrieval of single or multiple data blocks in multimedia buffer nodes in streaming systems, like MPEG-4.

This problem is solved by the present invention as disclosed in claim 1. An apparatus using the inventive method is disclosed in claim 8.

According to the invention, additional parameters are added to the definition of a multimedia buffer node, e.g. audio or video node, so that multiple data blocks with AV contents can be stored and selectively processed, e.g. included into a scene, updated or deleted. In the case of MPEG-4 these additional parameters are new fields in the description of a node, e.g. in the 'audioBuffer' node or 'mediaBuffer' node. The new fields define the position of a data block within a received data stream, e.g. audio stream, and how to handle the loading of this block, e.g. overwriting previously stored data blocks or accumulating data blocks in a buffer.

### Brief description of the drawings

Exemplary embodiments of the invention are described with reference to the accompanying drawings, which show in
Fig.1 the general structure of an MPEG-4 scene;
Fig.2 an exemplary 'AdvancedAudioBuffer' node for MPEG-4; and
Fig.3 the fields within an exemplary 'AdvancedAudioBuffer' node for MPEG-4.

### Detailed description of the invention

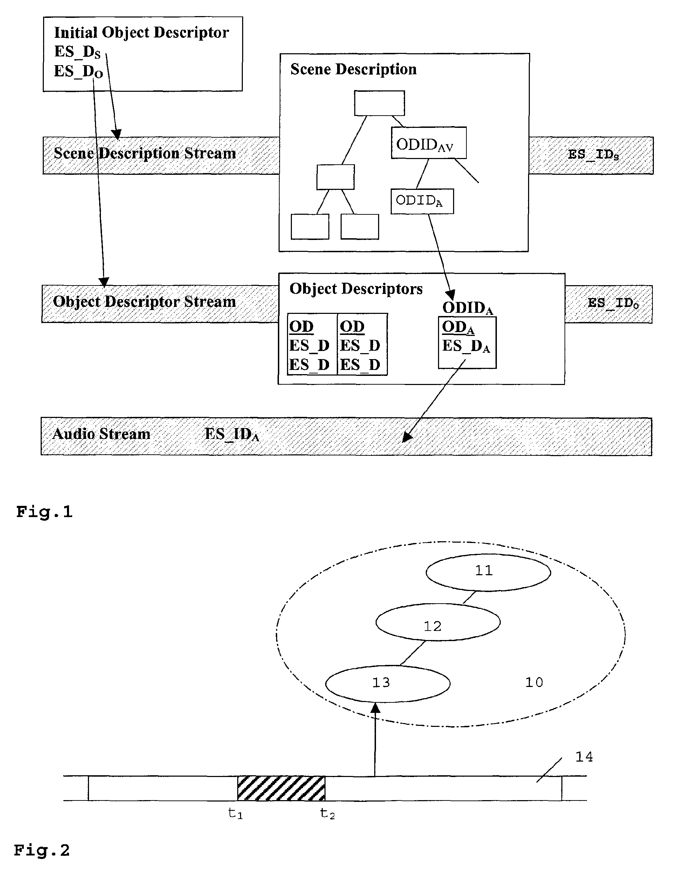

Fig.1 shows the composition of an MPEG-4 scene, using a scene description received in a scene description stream ES_IDₛ. The scene comprises audio, video and other data, and the audio and video composition is defined in an AV node ODID_{AV}. The audio part of the scene is composed in an audio compositor, which includes an AdvancedAudioBuffer node and contains a reference ODID_{A} to an audio object, e.g. decoder. The actual audio data belonging to this audio object are contained as packets in an ES, namely the audio stream, which is accessible through its descriptor ES_D_{A}. The AdvancedAudioBuffer node may pick out multiple audio data packets from the audio stream ES_ID_{A} coming from an audio decoder.

The audio part of an MPEG-4 scene is shown in more detail in Fig.2. The audio part of a scene description 10 contains a sound node 11 that has an AdvancedAudioBuffer node 12, providing an interface for storing audio data. The audio data to be stored consist of packets within the audio stream 14, which is received from an audio decoder. For each data packet is specified at which time it is to be decoded. The AdvancedAudioBuffer node 12 holds the time information for the packets to load, e.g. start time t₁ and end time t₂. Further, it can identify and access the required ES by referring to an AudioSource node 13. The AdvancedAudioBuffer node may buffer the specified data packet without overwriting previously received data packets, as long as it has sufficient buffer capacity.

The AdvancedAudioBuffer node 12 can be used instead of the AudioBuffer node defined in subclause 9.4.2.7 of the MPEG-4 systems standard ISO/IEC 14496-1:2002. As compared to the AudioBuffer node, the inventive AdvancedAudioBuffer node has an enhanced load mechanism that allows e.g. reloading of data.

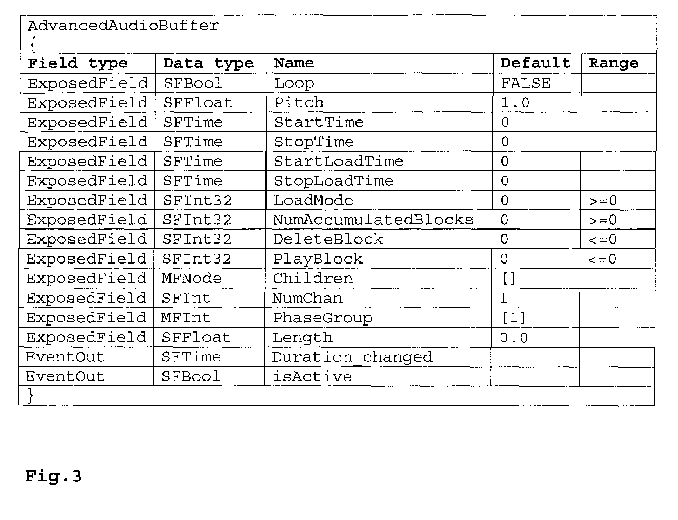

The AdvancedAudioBuffer node can be defined using the MPEG-4 syntax, as shown in Fig.3. It contains a number of fields and events. Fields have the function of parameters or variables, while events represent a control interface to the node. The function of the following fields is described in ISO/IEC 14496-1:2002, subclause 9.4.2.7: 'loop', 'pitch', 'startTime', `stopTime', 'children', 'numChan', 'phaseGroup', , 'length' 'duration_changed' and 'isActive'. The 'length' field specifies the length of the allocated audio buffer in seconds. In the current version of the mentioned standard this field cannot be modified. This means that another AudioBuffer node must be instantiated when another audio data block shall be loaded, since audio data is buffered at the instantiation of the node. But the creation of a new node is a rather complex software process, and may result in a delay leading to differing time references in the created node and the BIFS tree.

The following new fields, compared to the AudioBuffer node, are included in the AdvancedAudioBuffer node: 'startLoadTime', 'stopLoadTime', 'loadMode', 'numAccumulatedBlocks', 'deleteBlock' and 'playBlock'. With these new fields it is possible to enable new functions, e.g. load and delete stored data. Further, it is possible to define at node instantiation time the buffer size to be allocated, independently from the actual amount of data to be buffered. The buffer size to be allocated is specified by the 'length' field. The 'startTime' and 'stopTime' fields can be used alternatively to the 'startLoadTime' and 'stopLoadTime' fields, depending on the mode described in the following.

Different load mechanisms may exist, which are specified by the field 'loadMode'. The different load modes are e.g. Compatibility mode, Reload mode, Accumulate mode, Continuous Accumulate mode and Limited Accumulate mode.

In Compatibility mode, audio data shall be buffered at the instantiation of the AdvancedAudioBuffer node, and whenever the length field changes. The 'startLoadTime', 'stopLoadTime', 'numAccumulatedBlocks', 'deleteBlock' and 'playBlock' fields have no effect in this mode. The 'startTime' and 'stopTime' fields specify the data block to be buffered.

In Reload mode, the 'startLoadTime' and 'stopLoadTime' fields are valid. When the time reference of the AdvancedAudioBuffer node reaches the time specified in the 'startLoadTime' field, the internal data buffer is cleared and the samples at the input of the node are stored until value in the 'stopLoadTime' field is reached, or the stored data have the length defined in the 'length' field. If the 'startLoadTime' value is higher or equal to the 'stopLoadTime' value, a data block with the length defined in the 'length' field will be loaded at the time specified in 'startLoadTime'. The 'numAccumulatedBlocks', 'deleteBlock' and 'playBlock' fields have no effect in this mode.

In the Accumulate mode a data block defined by the interval between the 'startLoadTime' and 'stopLoadTime' field values is appended at the end of the buffer contents. In order to have all data blocks accessible, the blocks are indexed, or labeled, as described below. When the limit defined by the 'length' field is reached, loading is finished. The field 'numAccumulatedBlocks' has no effect in this mode.

In the Continuous Accumulate mode a data block defined by the interval between the 'startLoadTime' and 'stopLoadTime' field values is appended at the end of the buffer contents. All data blocks in the buffer are indexed to be addressable, as described before. When the limit defined by the 'length' field is reached, the oldest stored data may be discarded, or overwritten. The field 'numAccumulatedBlocks' has no effect in this mode.

In the Limited Accumulate mode is similar to the Accumulate mode, except that the number of stored blocks is limited to the number specified in the 'numAccumulatedBlocks' field. In this mode, the 'length' field has no effect.

For some of the described load mechanisms, a transition from 0 to a value below 0 in the 'deleteBlock' field starts deleting of a data block, relative to the latest data block. The latest block is addressed with -1, the block before it with -2 etc. This is possible e.g. in the following load modes: Accumulate mode, Continuous Accumulate mode and Limited Accumulate mode.

Since the inventive buffer may hold several data blocks, it is advantageous to have a possibility to select a particular data block for reproduction. The 'playBlock' field defines the block to be played. If the 'playBlock' field is set to 0, as is done by default, the whole content will be played, using the 'startTime' and 'stopTime' conditions. This is the above-mentioned Compatibility mode, since it is compatible to the function of the known MPEG-4 system. A negative value of 'playBlock' addresses a block relative to the latest block, e.g. the latest block is addressed with -1, the previous block with -2 etc.

It is an advantage of the inventive method that a buffer node can be reused, since loading data to the node is faster than in the current MPEG-4 standard, where a new node has to be created before data can be buffered. Therefore it is easier for the AdvancedAudioBuffer node to match the timing reference of the BIFS node, and thus synchronize e.g. audio and video data in MPEG-4.

An exemplary application for the invention is a receiver that receives a broadcast program stream containing various different elements, e.g. traffic information. From the audio stream, the packets with traffic information are extracted. With the inventive MPEG-4 system it is possible to store these packets, which are received discontinuously at different times, in the receiver in a way that they can be accumulated in its buffer, and then presented at a user defined time. E.g. the user may have an interface to call the latest traffic information message at any time, or filter or delete traffic information messages manually or automatically. On the other hand, also the broadcaster can selectively delete or update traffic information messages that are already stored in the receivers data buffer.

Advantageously, the invention can be used for all kinds of devices that receive data streams composed of one or more control streams and one or more multimedia data streams, and wherein a certain type of information is divided into different blocks sent at different times. Particularly these are broadcast receivers and all types of music rendering devices.

The invention is particularly good for receivers for MPEG-4 streaming systems.

## Claims

1. Method for decoding a data stream, the data stream containing a first and a second substream, the first substream (14) containing multimedia data packets and the second substream containing control information (10), wherein the multimedia data packets contain an indication of the time when to be presented, and wherein the multimedia data packets are decoded prior to the indicated presentation time, **characterized in that**
- first decoded multimedia data packets are buffered at least until, after a further processing, they can be presented in due time; and
- other multimedia data packets may be buffered, wherein the other multimedia data packets may replace or be appended to the first decoded multimedia data packets.

2. Method according to claim 1, wherein the control information defines whether the other multimedia data packets are appended to the first data packets or replace them.

3. Method according to claim 1 or 2, wherein the control information contains first, second and third control data,
- the first control data (Length) defining the allocated buffer size,
- the second control data (LoadMode) defining whether the other multimedia data packets are appended to the first packets or replace them, and
- the third control data (StartLoadTime, StopLoadTime) defining a multimedia data packet to be buffered.

4. Method according to any of claims 1-3, wherein labels are attached to the buffered first and other multimedia data packets, and the packets may be accessed through their respective label.

5. Method according to any of claims 1-4, wherein the labels attached to the buffered data packets contain an index relative to the latest received data packet.

6. Method according to any of claim 1-5, wherein the first substream contains audio data and the second substream contains a description of the presentation.

7. Method according to any of claims 1-6, wherein the data stream is compliant with the MPEG-4 standard.

8. Apparatus comprising means for decoding a data stream, the data stream containing a first and a second substream, the first substream (14) containing multimedia data packets and the second substream containing control information (10), wherein the multimedia data packets contain an indication of the time when to be presented, **characterized in that**
- first decoded multimedia data packets are buffered in a buffering means; and
- other multimedia data packets are buffered in the same buffering means, wherein the other multimedia data packets may replace or be appended to the first decoded multimedia data packets, depending on the control information (10).

9. Apparatus according to claim 8, further comprising means for attaching labels to the buffered first and other multimedia data packets, and means for accessing, retrieving or deleting the packets through their respective label.

10. Apparatus according to claim 8 or 9, wherein the data stream is an MPEG-4 compliant data stream.
